Europäisches Patentamt

European Patent Office

Office européen des brevets

(19)

(11) Veröffentlichungsnummer: **0 286 720 B1**

(12) **EUROPÄISCHE PATENTSCHRIFT**

(45) Veröffentlichungstag der Patentschrift: 31.07.91     (51) Int. Cl.⁵: **G01P 5/00**

(21) Anmeldenummer: 87114452.3

(22) Anmeldetag: 03.10.87

(54) **Verfahren zur Messung von Strömungsvektoren in Gasströmungen.**

(30) Priorität: 10.04.87 DE 3712153

(43) Veröffentlichungstag der Anmeldung:
19.10.88 Patentblatt 88/42

(45) Bekanntmachung des Hinweises auf die
Patenterteilung:
31.07.91 Patentblatt 91/31

(84) Benannte Vertragsstaaten:
DE FR GB

(56) Entgegenhaltungen:
GB-A- 2 109 548
US-A- 3 941 477

(73) Patentinhaber: Deutsche Forschungsanstalt
für Luft- und Raumfahrt e.V.
Linder Höhe Postfach 90 60 58
W-5000 Köln 90(DE)

(72) Erfinder: Schodl, Richard, Dr.
Rembrandt Strasse 65
W-5210 Troisdorf(DE)

(74) Vertreter: Selting, Günther, Dipl.-Ing. et al
Patentanwälte von Kreisler, Selting, Werner
Deichmannhaus am Hauptbahnhof
W-5000 Köln 1(DE)

## Beschreibung

Die Erfindung betrifft ein Verfahren nach dem Oberbegriff des Patentanspruchs 1 sowie eine Vorrichtung zur Durchführung des Verfahrens.

Zur Messung von Strömungsvektoren in Gasströmungen ist es bekannt, das Licht einer Lichtquelle mit einer Fokussiervorrichtung in dem Strömungskanal an zwei dicht hintereinander angeordneten Fokussierungsstellen zu fokussieren (DE-PS 24 49 358). Die in der Gasströmung enthaltenen Teilchen werden, wenn sie die Fokussierungsstellen passieren, beleuchtet. Die von den Teilchen reflektierte Streustrahlung erzeugt beim Passieren der ersten Fokussierungsstelle einen Startimpuls und beim Passieren der zweiten Fokussierungsstelle einen Stopimpuls. Aus dem zeitlichen Abstand von Startimpuls und Stopimpuls kann die Komponente des Vektors der Teilchengeschwindigkeit in Richtung der durch die Fokussierungsstellen hindurchgehenden Geraden bestimmt werden. Diese Richtung kann durch Bewegen der Fokussiervorrichtung verändert werden, so daß Strömungsvektoren mit unterschiedlichen Richtungen erfaßt werden können. Dieses Verfahren ermöglicht jedoch nur die Erfassung derjenigen Komponenten der Strömungsvektoren, die in einer Normalenebene zur optischen Achse der Fokussiervorrichtung verlaufen. Die in Richtung der optischen Achse verlaufende Komponente kann nicht bestimmt werden. Dieses Verfahren wird als 2d-Verfahren bezeichnet, was angibt, daß eine zweidimensionale Vektormessung erfolgt.

Eine Weiterentwicklung des genannten Verfahrens, durch die auch die in Richtung der optischen Achse verlaufende Vektorkomponente ermittelt werden kann (DE-PS 31 45 987), wird als 3d-Verfahren bezeichnet. Bei diesem Verfahren werden vier Laserstrahlen benutzt, von denen je zwei ein Strahlenpaar bilden. Die Strahlen eines jeden Strahlenpaares sind auf zwei Fokussierungsstellen gerichtet, die in derselben Normalenebene zur optischen Achse liegen. Infolge der Unterschiede der Einstrahlrichtungen der auf eine Fokussierungsstelle gerichteten Strahlen werden die mit den Strahlenpaaren gemessenen Strömungsrichtungen unterschiedlich festgelegt. Aus diesem Richtungsunterschied läßt sich auf die Strömungskomponente in Richtung der optischen Achse des Systems schließen. Dieses bekannte Verfahren erfordert einen relativ großen Aufwand und eine hohe Laserleistung.

Der Erfindung liegt die Aufgabe zugrunde, ein Verfahren der im Oberbegriff des Patentanspruchs 1 angegebenen Art zu schaffen, bei dem auch die in Richtung der optischen Achse verlaufende Komponente des Strömungsvektors mit einfachen Mitteln erfaßt werden kann, so daß der Strömungsvektor im dreidimensionalen Raum unter Verwendung von nur zwei Lichtstrahlen erfaßt werden kann.

Die Lösung dieser Aufgabe erfolgt erfindunggemäß mit den im Patentanspruch 1 angegebenen Merkmalen.

Nach der Erfindung werden die Fokussierungsstellen, die unterschiedliche Abstände von der optischen Achse haben, zusätzlich auch in Richtung der optischen Achse gegeneinander versetzt. Dabei wird eine erste Messung durchgeführt, bei der die Fokussiervorrichtung des einen Strahls näher an der Fokussierungsstelle liegt als diejenige des anderen Strahls und bei einer zweiten Messung werden diese Verhältnisse umgekehrt, so daß die Fokussierungsstelle des ersten Strahls weiter von der Fokussiervorrichtung entfernt ist als diejenige des zweiten Strahls. Dadurch wird der Winkel, den die durch die Fokussierungsstellen hindurchgehende Gerade mit der Normalenebene zur optischen Achse bildet, einmal positiv und einmal negativ. Bei beiden Messungen wird die Häufigkeit der Teilchenerkennung ermittelt, d.h. das Auftreten von zusammengehörenden Paaren von Startimpulsen und Stopimpulsen. Der Unterschied beider Meßergebnisse wird für die Ermittlung des dreidimensionalen Strömungsvektors, genauer gesagt: für die Ermittlung der in Richtung der optischen Achse verlaufenden Komponente dieses Vektors, benutzt. Der Begriff "Unterschied" bedeutet in diesem Fall nicht notwendigerweise die Differenz beider Meßwerte sondern umfaßt auch eine Quotientenbildung oder eine andere Korrelation. Es gibt verschiedene mathematische Verfahren, um aus beiden Meßwerten die in Richtung der optischen Achse verlaufende Vektorkomponente zu ermitteln.

Die Unteransprüche enthalten vorteilhafte Ausgestaltungen bzw. Weiterbildungen der Erfindung. Bei dem erfindungsgemäßen Verfahren können die beiden Messungen, mit denen die in Richtung der optischen Achse verlaufende Vektorkomponente der Strömung ermittelt wird, zeitlich nacheinander durchgeführt werden, wozu die Fokussiervorrichtung zwischen beiden Messungen um 180° um ihre Achse gedreht wird. Diese Verfahrensvariante ist mit gerigem apparativem Aufwand durchführbar, erfordert aber wegen der beiden nacheinander durchzuführenden Messungen einen größeren Zeitaufwand.

Bei einer anderen Verfahrensvariante werden beide Messungen gleichzeitig durchgeführt. Aus jedem der beiden räumlich voneinander getrennten Strahlen werden mehrere aus unterschiedlichen Lichtfarben bestehende Fokussierungsstellen mit unterschiedlichen Brennweiten erzeugt. Für die eine Messung können zwei Fokussierungsstellen ausgewählt werden, die auf einer Geraden liegen, welche unter positivem Winkel zu der Normalenebene zur optischen Achse verläuft, während für die zweite Messung solche Fokussierungsstellen ausgewählt werden, die auf einer Geraden liegen, welche unter einem negativen Winkel zu der genannten Normalenebene verläuft. Für diese Verfahrensvariante benötigt man mindestens vier Fokussierungsstellen, von denen jeweils zwei auf einem gemeinsamen Strahl liegen. Die beiden Strahlen können durch unterschiedliche Polarisierung und anschließende räumliche Trennung von Licht derselben Lichtquelle erzeugt werden. Zweckmäßigerweise sind die Beträge des positiven und des negativen Winkels der durch zwei Paare von Fokussierungsstellen hindurchgehenden Geraden in Bezug auf die Normalenebene zur optischen Achse einander gleich.

Die Erfindung bezieht sich ferner auf Vorrichtungen mit den Merkmalen der Patentansprüche 7 und 8 zur Durchführung des erfindungsgemäßen Verfahrens.

Im folgenden werden unter Bezugnahme auf die Zeichnungen Ausführungsbeispiele der Erfindung näher erläutert.

Es zeigen:

Fig.1 eine Ansicht der Geometrie des Meßvolumens bei zwei Fokussierungsstellen, die den gleichen Abstand von der Fokussiervorrichtung haben, wobei die Häufigkeitsverteilung der Erkennung von Teilchendurchgängen als Funktion der axialen Position, bei der die Teilchen die Strahlen durchqueren, dargestellt ist,

Fig.2 eine Darstellung zweier Fokussierungsstellen mit eingezeichneter Empfindlichkeitscharakteristik,

Fig.3 zwei graphische Darstellungen der Häufigkeit von Meßergebnissen bei unterschiedlichen Winkeln $\beta$ der Strömung in Bezug auf die Normalenebene zur optischen Achse,

Fig.4 eine Darstellung des Integralwertes I der Häufigkeitsverteilung über dem Winkel $\beta$,

Fig. 5 eine Darstellung der Verhältnisse bei in Richtung der optischen Achse gegeneinander versetzten Fokussierungsstellen,

Fig. 6 die in Fig. 4 dargestellte Häufigkeitsverteilung bei der Anordnung der Fokussierungsstellen gemäß Fig. 5,

Fig. 7 eine Darstellung zweier Systeme A und B unterschiedlich gegeneinander versetzter Fokussierungsstellen,

Fig. 8 die Integralwerte der Häufigkeitsverteilungen (Meßraten) bei den beiden Systemen nach Fig. 7 über dem Winkel $\beta$,

Fig. 9 eine graphische Darstellung der normierten Differenz der Meßraten über dem Strömungswinkel $\beta$ zur Verdeutlichung der Linearität zwischen der Differenz und dem Winkel $\beta$,

Fig. 10 eine Draufsicht und eine Seitenansicht einer ersten Ausführungsform der Meßvorrichtung,

Fig. 11 die unterschiedliche Anordnung der Fokussierungsstellen bei der Vorrichtung nach Fig. 10, wenn die Fokussiervorrichtung um 180° gedreht wird, um von dem Meßsystem A auf das Meßsystem B überzugehen,

Fig. 12 eine Draufsicht und eine Seitenansicht einer zweiten Ausführungsform der Meßvorrichtung,

Fig. 13 eine Darstellung der vier Fokussierungsstellen, die sich bei der Vorrichtung nach Fig. 12 ergeben und

Fig. 14 eine gegenüber Fig. 12 vereinfachte weitere Ausführungsform der Vorrichtung.

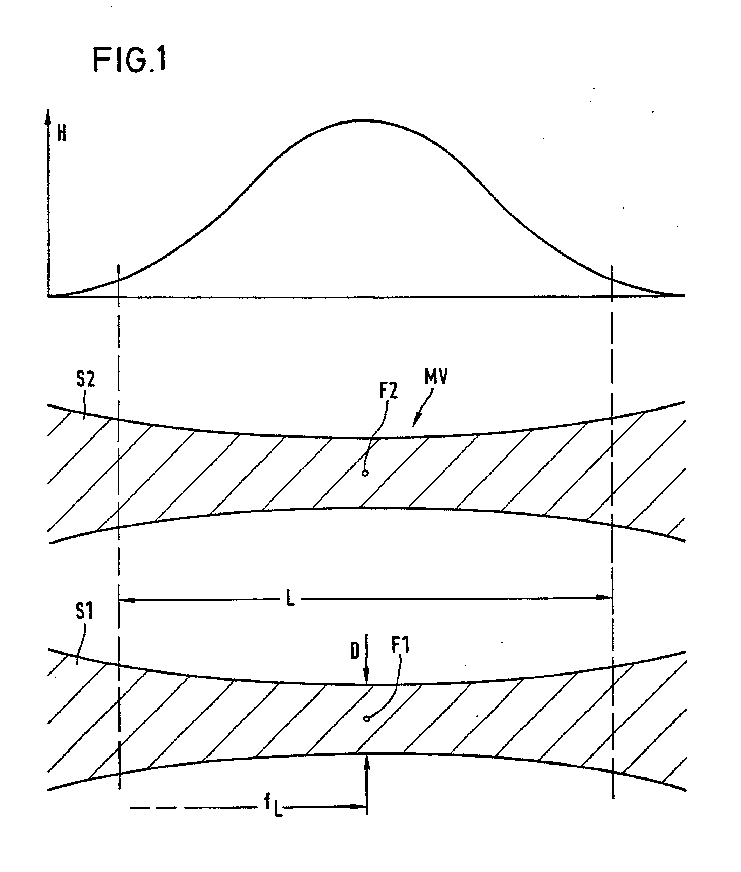

Zunächst werden unter Bezugnahme auf die Fign. 1 bis 9 die Grundlagen erläutert, die für das Verständnis der Erfindung erforderlich sind.

In Fig. 1 ist die Meßvolumengeometrie eines zweidimensionalen Zwei-Fokus-Verfahrens dargestellt. Im Meßvolumen MV des Strömungskanals werden zwei Lichtstrahlen S1 und S2, die im wesentlichen parallel und mit geringem Abstand zueinander verlaufen, an räumlich getrennten Fokussierungsstellen F1 und F2 fokussiert. Die axiale Erstreckung L des Meßvolumens MV wird bestimmt durch die axiale Intensitätsverteilung in den Strahlen und durch den Strahlengang der beobachtenden Optik, der auf die Strahlenzentren optimiert ist. Ein Teilchen, das durch das Zentrum einer Fokussierungsstelle fliegt und durch den betreffenden Strahl beleuchtet wird, liefert an einem Photodetektor ein Signal maximaler Amplitude. Die axiale Länge L der Fokussierungsstelle ist so gewählt, daß dasselbe Teilchen, wenn es durch den Randbereich fliegt, nur ein Signal von einem Zehntel der maximalen Amplitude liefert. Da in realen Strömungen die Teilchen immer in Größenverteilungen vorliegen (kleine Teilchen liefern eine geringere Signalamplitude, sind allerdings häufiger als große Teilchen), werden im axialen Zentrum der Fokussierungsstelle die kleinen Teilchen noch erkannt, während im Randbereich nur die viel selteneren großen Teilchen erkannt werden. In der oberen Darstellung von Fig. 1 ist die Häufigkeit H der Erkennungssignale von Teilchen als Funktion der axialen Position, bei der die Teilchen die langgestreckte Fokussierungsstelle durchqueren, dargestellt. Die axiale Länge einer Fokussierungsstelle beträgt typischerweise 0,4 mm.

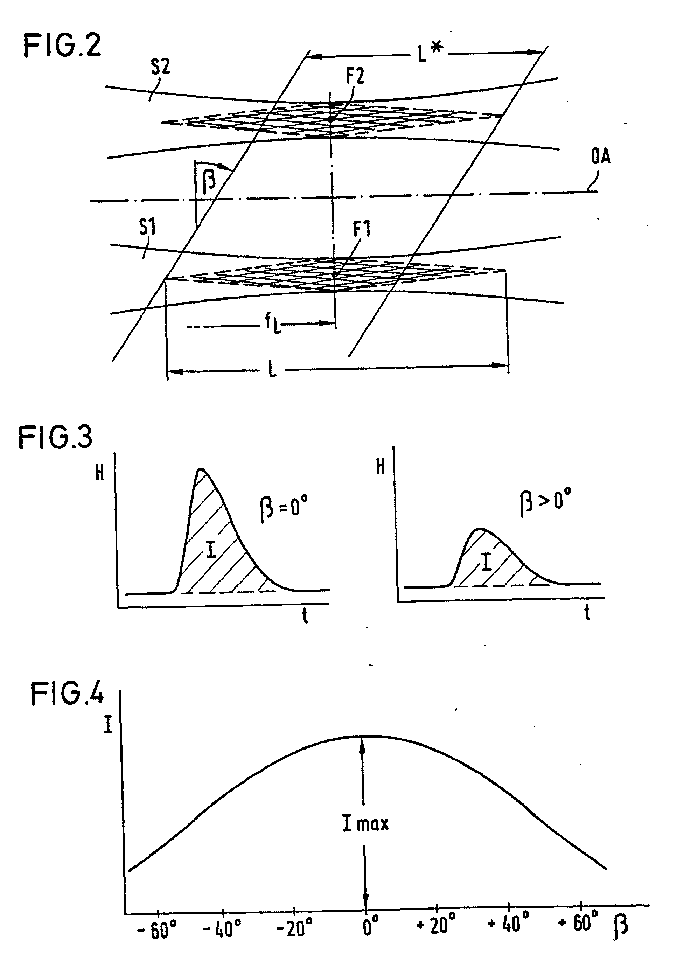

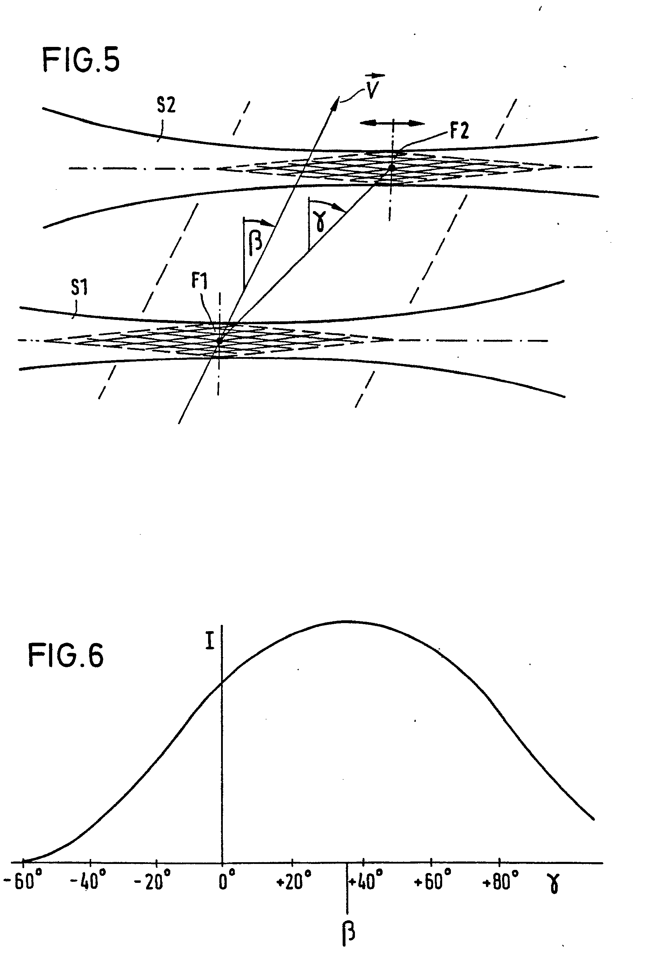

Bei dem in Fig. 2 dargestellten Strahlenpaar S1, S2 liegen die Zentren der Fokussierungsstellen F1 und F2 in demselben Abstand $f_L$ (Brennweite) von der Fokussiervorrichtung. Die Empfindlichkeitscharakteristik ist durch die kreuzschraffierten Flächen in den Strahlen angedeutet. Wenn die Strömung unter einem Winkel $\beta$ zur Normalen zur optischen Achse OA des Fokussierungssystems in der Ebene der Strahlen S1 und S2 (der Zeichnungsebene) verläuft, sind die Häufigkeitsverteilungen H der gemessenen Flugzeiten t für verschiedene Winkel $\beta$ in Fig. 3 dargestellt. Wenn der Winkel $\beta$ ungleich Null ist, verkürzt sich die wirksame axiale Länge L des Meßvolumens auf L$_*$. Dies führt zur Abnahme der Häufigkeit H mit zunehmendem Betrag des Winkels $\beta$. Der Einfluß des Strömungswinkels $\beta$ wird durch die oben erwähnte axiale Empfindlichkeitscharakteristik verstärkt.

In Fig. 3 ist der Integralwert I der Häufigkeitsverteilung H jeweils als schraffierter Bereich der Kurven dargestellt. Dieser Integralwert I ist, bezogen auf die Meßzeit, das Maß für die Meßfrequenz.

In Fig. 4 ist der Integralwert I (proportional zur Häufigkeit von Meßergebnissen = Meßrate) über dem Strömungswinkel $\beta$ aufgetragen. Man könnte die Abhängigkeit der Meßrate vom Strömungswinkel $\beta$ zur Bestimmung der Axialkomponente des Strömungsvektors nutzen, jedoch ist die Meßrate von vielen anderen Parametern abhängig, wie z.B. Teilchendichte, Laserleistung, Empfindlichkeit der Photodetektoren u. dgl., so daß eine eindeutige Kalibrierung praktisch nicht möglich ist.

Fig. 5 zeigt in gleicher Darstellung wie Fig. 2 den Fall, daß die Fokussierungsstellen F1 und F2 axial gegeneinander versetzt sind. Die Verbindungslinie der Zentren der Fokussierungsstellen F1 und F2 bildet mit der Achsennormalen den Winkel $\gamma$. Verändert man den Winkel $\gamma$, indem die Fokussierungsstelle F1 fest bleibt, während die Fokussierungsstelle F2 achsparallel verschoben wird, so ergibt sich der in Fig. 6 dargestellte Verlauf des Integrals I (proportional zur Meßrate) in Abhängigkeit vom Winkel $\gamma$. Man erkennt, daß I den Maximalwert annimmt, wenn $\gamma$ gleich $\beta$ ist, also wenn die durch die Zentren der Fokussierungsstellen F1 und F2 hindurchgehende Gerade genau in Strömungsrichtung verläuft. Durch Ermittlung der Lage des Maximums kann daher der Strömungswinkel $\beta$ in Bezug auf die Normale zur optischen Achse des Systems festgestellt werden.

Das beschriebene Meßverfahren setzt voraus, daß während der Verschiebung von F2 die Strömungs- und Meßverhältnisse unverändert bleiben. Die Meßrate bedarf dann keiner zusätzlichen Kalibrierung. Bei Veränderung der oben erwähnten Parameter, wie z.B. der Laserleistung, wird sich bei einem nachfolgenden Meßzyklus zwar das Maximum der Meßrate auf einen anderen Wert einstellen, die Lage des Maximums, d.h. der Strömungswinkel $\beta$, bleibt jedoch unverändert. Nachteilig ist, daß das Maximum der in Fig. 6 dargestellten Kurve sehr flach verläuft und daher nur eine ungenaue Lagebestimmung ermöglicht. Ferner erfordert die Verschiebung der Fokussierungsstelle F2 die Aufnahme einer Meßreihe, wozu erhebliche Zeit benötigt wird.

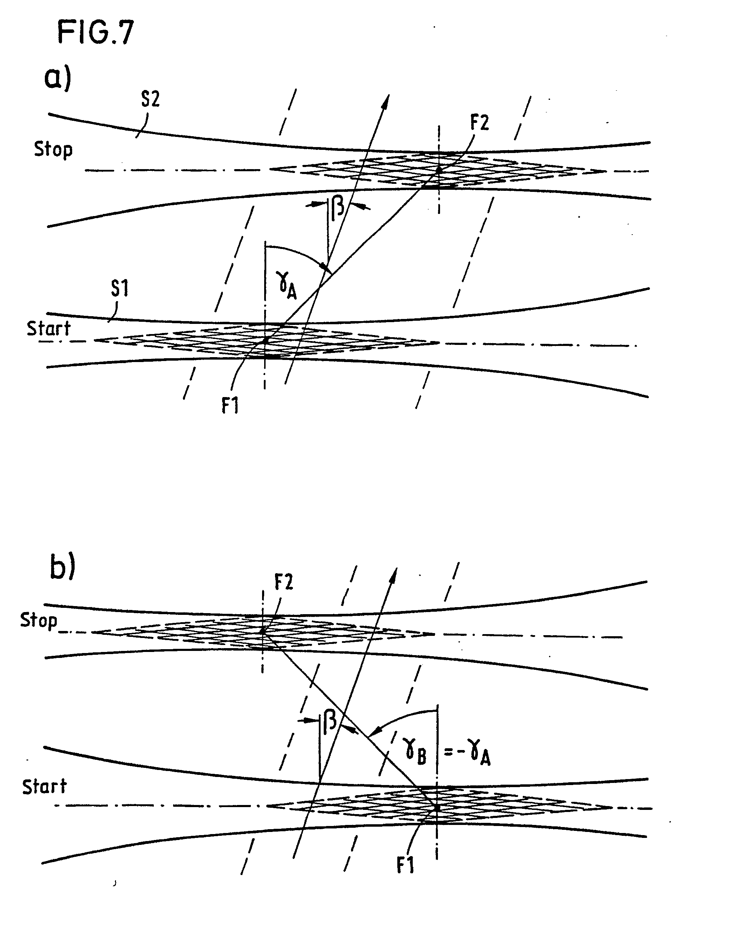

Das erfindungsgemäße Verfahren wird nun in seinen Grundzügen anhand von Fig. 7 erläutert. Bei dem System A ist das Zentrum der Fokussierungsstelle F2 gegenüber demjenigen der Fokussierungsstelle F1 um den Winkel $\gamma_A$ 45° versetzt. Bei dem darunter dargestellten System ist dagegen die Fokussierungsstelle F2 gegenüber F1 um den Winkel $\gamma_B = -45°$ versetzt. System A weist bei Strömungsvektoren mit $\beta = +45°$ die größte Signalrate auf, während bei Strömungswinkeln von $\beta = -45°$ die Meßrate auf Null zurückgeht. Dasselbe gilt umgekehrt für System B. In Fig. 7 ist ferner eingezeichnet, daß ein Teilchen, das die Fokussierungsstelle F1 passiert, von einem Photodetektor erkannt wird, der ein Start-Signal erzeugt, während beim Passieren der Fokussierungsstelle F2 ein Stop-Signal erzeugt wird.

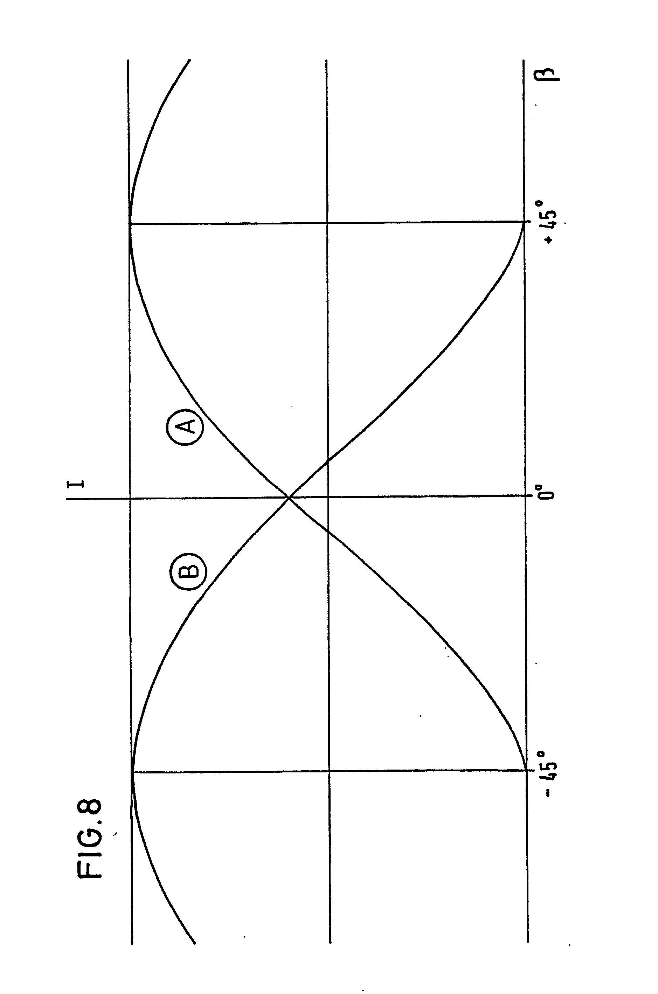

Fig. 8 zeigt das Integral I (bzw. die Meßrate) über dem Winkel $\beta$ für beide Systeme A und B nach Fig. 7. Für Strömungswinkel $\beta = 0°$, weisen beide Systeme eine Meßrate von etwa 60% der maximalen Meßrate auf. Man erkennt, daß beide Systeme für Strömungswinkel im Bereich von $-30° < \beta < +30°$ eine nahezu lineare Charakteristik und eine hohe Empfindlichkeit aufweisen. Wenn man nun mit beiden Systemen an demselben Meßort mißt, kann man aus dem Unterschied der Meßraten der Systeme A und B den Strömungswinkel $\beta$ ermitteln.

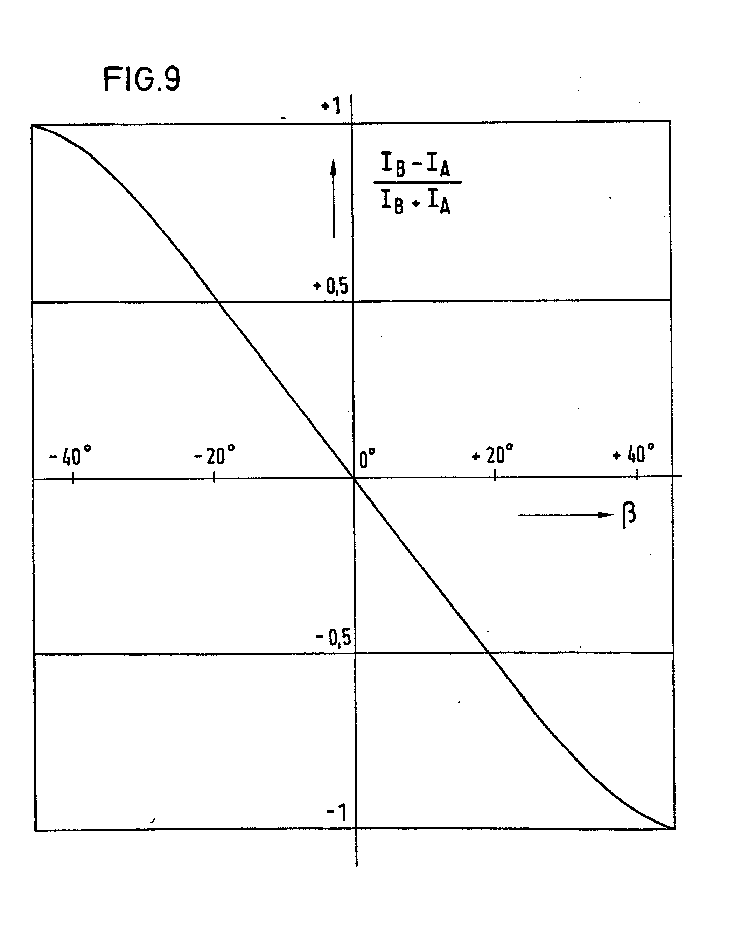

In Fig. 9 ist die auf $(I_B + I_A)$ normierte Differenz $(I_B - I_A)$ in Form der Größe $(I_B - I_A)/(I_B + I_A)$ dargestellt. Man erkennt, daß sich eine gute Linearität der Kurve ergibt. Aus der Differenz $(I_B - I_A)$ kann somit auf einfache Weise der Strömungswinkel $\beta$ ermittelt werden.

Die in Fig. 9 dargestellte Beziehung ist im wesentlichen nur noch abhängig vom Achsversatz der Fokussierungsstellen, der durch die Winkel $\gamma_A$ und $\gamma_B$ (in diesem Beispiel ist $\gamma_A = +45°$ und $\gamma_B = -45°$) gekennzeichnet werden kann, und von der axialen Erstreckung L der Fokussierungsstellen. Die Kurve kann durch experimentelle Eichung ermittelt werden.

Der axiale Versatz der Fokussierungsstellen kann auf einfache Weise dadurch erhalten werden, daß man eine Linse verwendet, die nicht vollständig chromatisch korrigiert ist, so daß sich für verschiedene Lichtfarben unterschiedliche Brennweiten ergeben.

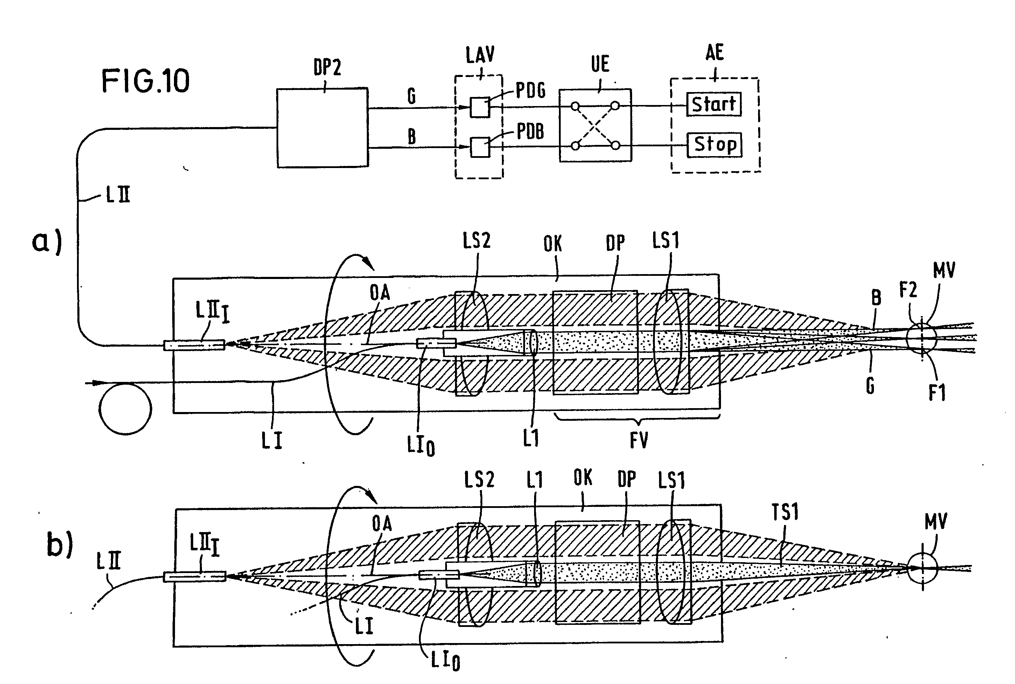

In Fig. 10 ist eine Vorrichtung dargestellt, mit der die beiden Messungen A und B nacheinander durchgeführt werden können.

Gemäß Fig. 10 ist ein rohrförmiger langgestreckter optischer Kopf OK vorgesehen, in den ein Lichtleiterkabel LI hineinführt. Das Lichtleiterkabel LI ist ein polarisationserhaltendes Lichtleiterkabel, dessen Auskopplungseinheit $LI_0$ längs der optischen Achse OA angeordnet ist. Der divergierend aus der Auskopplungseinheit $LI_0$ austretende mehrfarbige Lichtstrahl wird durch eine Linse L1 parallelisiert und entlang der optischen Achse der Fokussiervorrichtung FV zugeführt. Die Fokussiervorrichtung FV enthält hintereinander im Strahlengang ein Dispersionsprisma DP und eine Fokussierungslinse LS1. Hinter der Linse LS1 tritt die Strahlung aus dem optischen Kopf OK aus, um in dem Meßvolumen MV fokussiert zu werden.

Strahlung, die von Teilchen im Meßvolumen MV reflektiert wird, wird von der Linse LS1 parallel gerichtet und die parallele Strahlung wird durch das Dispersionsprisma DP in Gegenrichtung zur hinlaufenden Strahlung geleitet und der Sammellinse LS2 zugeführt, die diese Strahlung auf die Einkoppeleinheit $LII_i$ eines Lichtleiters LII fokussiert.

Die Sammellinse LS2 weist entlang der optischen Achse OA eine Mittelöffnung auf, durch die der aus der Auskopplungseinheit $LI_0$ austretende Strahl hindurchgeht.

Das Dispersionsprisma DP führt eine räumliche Trennung der im einfallenden Lichtstrahl vorhandenen Farben vor. Diese Farben werden im Meßvolumen MV an Fokussierungsstellen fokussiert, die unterschiedlichen Ablenkwinkeln entsprechen und somit quer zur optischen Achse OA gegeneinander versetzt angeordnet sind. Im vorliegenden Fall sei angenommen, daß die grüne Lichtkomponente an der Fokussierungsstelle F1 fokussiert wird, während die blaue Lichtkomponente an der Fokussierungsstelle F2 fokussiert wird. Die anderen Lichtkomponenten, die zwischen den Fokussierungsstellen F1 und F2 fokussiert werden, können für das beschriebene Verfahren außer Betracht bleiben.

In Fig. 10a) ist eine Draufsicht der Vorrichtung und in Fig. 10b) eine Seitenansicht der Vorrichtung dargestellt. Man erkennt, daß die Fokussierungsstellen im Meßvolumen MV in einer die optische Achse OA enthaltenden Ebene angeordnet sind, in dieser Ebene jedoch seitlich gegeneinander versetzt sind.

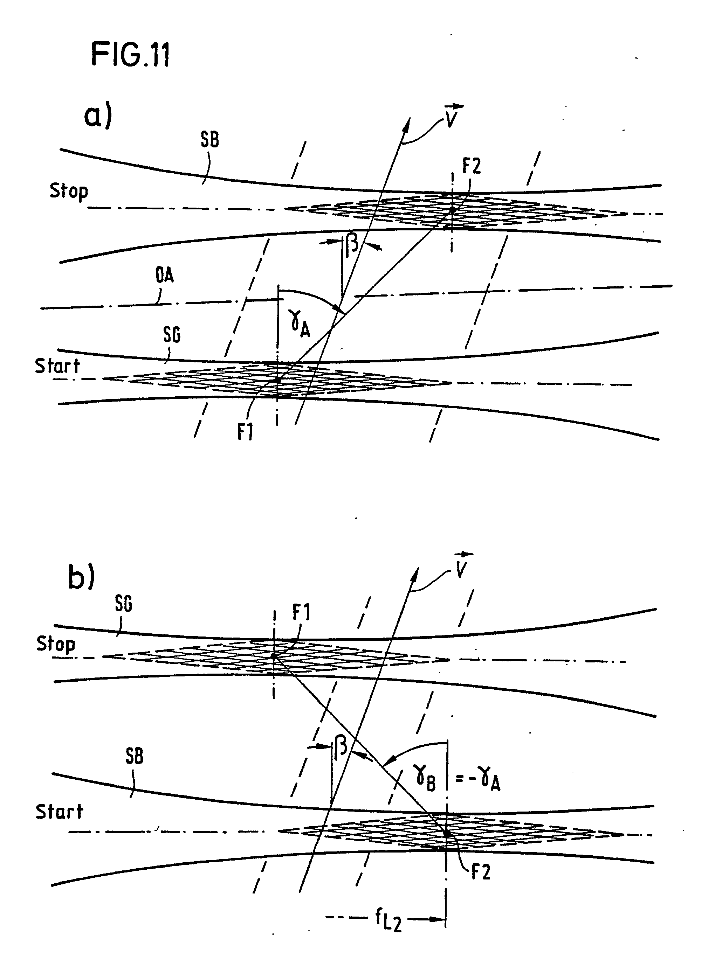

Wie Fig. 11 zeigt, sind die Zentren der Fokussierungsstellen F1 und F2 auch in Richtung der optischen Achse OA gegeneinander versetzt, was dadurch erreicht wird, daß die Linse LS1 chromatische Eigenschaften hat, d.h. daß die einzelnen Lichtfarben mit unterschiedlichen Brennweiten fokussiert werden. Die durch die Zentren der Fokussierungsstellen F1 und F hindurchgehende Gerade veräuft bei dem System A von Fig. 11 unter einem Winkel $\gamma_A$ zur Normalenebene der optischen Achse OA. Der Strömungswinkel zur Normalenebene ist mit $\beta$ bezeichnet.

Die Strahlenebene, in der die Achsen der Strahlen SB und SG verlaufen, wird unter Drehung des optischen Kopfs OK um die optische Achse A herum so gedreht, daß der Strömungsvektor in dieser Ebene liegt.

Bei der Messung A in Fig. 11 erhält man eine relativ hohe Meßrate, da der den axialen Strahlenversatz charakterisierende Winkel $\gamma_A$ ungefähr gleich dem Strömungswinkel $\beta$ ist, den der Strömungsvektor mit der Achsnormalenebene einschließt. Im Falle der Messung A erzeugen die Teilchen, wenn sie die Fokussierungsstelle F1 des grünen Strahls SG passieren, Startimpulse und, wenn sie die Fokussierungsstelle F2 des blauen Strahls SB passieren Stopimpulse.

Anschließend an die Messung A wird die Messung B durchgeführt, bei der der optische Kopf OK um die optische Achse OA herum gegenüber Messung A um 180° gedreht wird. Nun liegt in Strömungsrichtung der blaue Strahl SB vorne, so daß die in die Fokussierungsstelle F2 passierenden Teilchen Startimpulse erzeugen, während beim Passieren der Fokussierungsstelle F1 des grünen Strahls Stopimpulse erzeugt werden. Bei der Messung B ist der Winkel $\gamma_B$, den die durch die Zentren der Fokussierungsstellen F1 und F2 verlaufende Gerade mit der Achsnormalenebene bildet, gleich dem Winkel $-\gamma_A$. Bei der Messung B erhält man nur eine sehr geringe Meßrate, da in diesem Fall die Winkeldifferenz $\beta - \gamma_B$ sehr groß ist.

Aus dem Unterschied der Meßraten bei den Messungen A und B erhält man bei bekannter Eichkurve gemäß Fig. 9 den Strömungswinkel $\beta$.

Bei dem Meßsystem der Fig. 10, bei dem der zum Meßvolumen MV hinlaufende Strahl zentrisch entlang der optischen Achse OA durch den optischen Kopf OK geführt wird, wird das im Meßvolumen MV von Teilchen reflektierte rücklaufende Licht von der Linse LS1 parallelgerichtet und die verschiedenen Farbanteile werden im Dispersionsprisma DP wieder zusammengefügt. Der zurücklaufende Lichtstrahl wird von der Sammellinse LS2 in den Lichtleiter LII eingespeist. Dieser Lichtleiter führt zu einem weiteren Dispersionsprisma DP2 außerhalb des optischen Kopfs. In dem Dispersionsprisma DP2 werden der grüne Strahl SG und der blaue Strahl SB räumlich voneinander getrennt und beide Strahlen werden der Lichtaufnahmevorrichtung LAV zugeführt, die einen Photodetektor PDG für das grüne Licht und einen Photodetektor PDB für das blaue Licht enthält. Die elektrischen Signale der beiden Photodetektoren werden über eine Umschalteinheit UE der Auswerteeinheit AE zugeführt, die einen Startsignalgenerator und einen Stopsignalgenerator enthält. Bei der Messung A stellt die Umschalteinheit UE die in Fig. 10 in durchgezogenen Linien dargestellten Verbindungen her, wobei der Ausgang des Photodetektors PDG die Start-Signale erzeugt, während der Ausgang des Photodetektors PDB die Stop-Signale erzeugt. Bei der Messung B stellt die Umschalteinheit UE dagegen die gestrichelt dargestellten Verbindungen her, wobei der Photodetektor PDB die Start-Signale und der Photodetektor PDG die Stop-Signale erzeugt.

Durch die beschriebene Operationsweise wird nur durch die Verwendung einer Linse LS1 mit chromatischen Eigenschaften aus dem bisher bekannten zweidimensionalen Vielfarbensystem ein dreidimensionales System, bei dem auch die in Richtung der optischen Achse OA verlaufende Komponente des Strömungsvektors ermittelt werden kann. Immer dann, wenn durch Drehen des optischen Kopfs OK um 180° von Messung A auf Messung B umgeschaltet wird, wird gleichzeitig die Umschalteinheit UE betätigt. Ein gewisser Nachteil bei dem Verfahren nach Fign. 10 und 11 besteht darin, daß beide Messungen A und B zeitlich nacheinander durchgeführt werden müssen, so daß die Meßzeit gegenüber den bisherigen zweidimensionalen Messungen um den Faktor 2 verlängert wird.

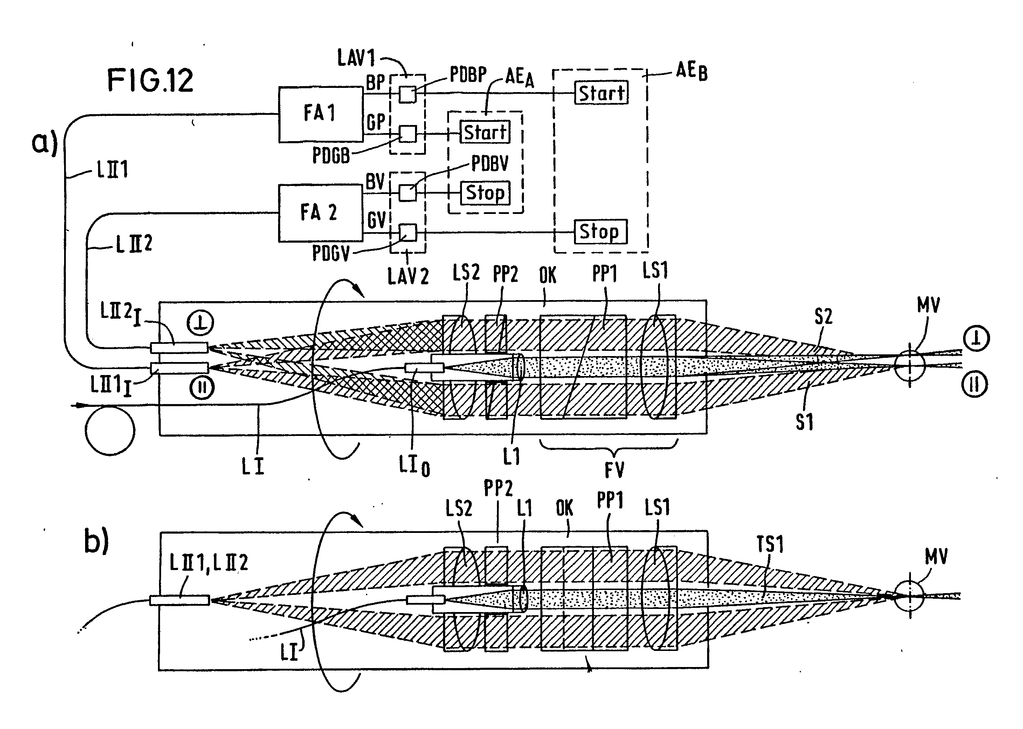

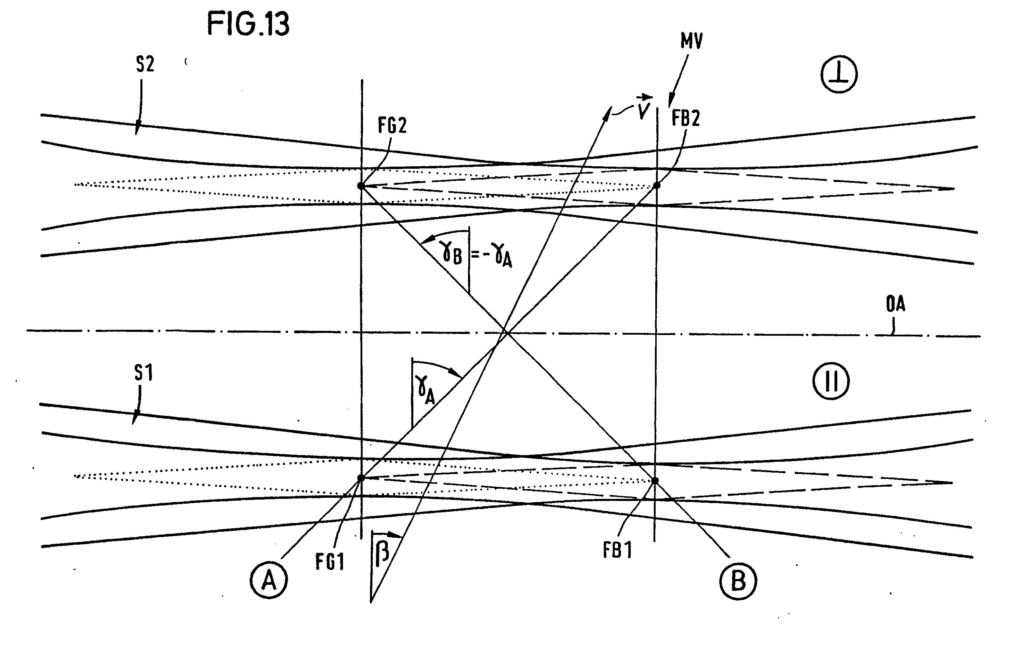

In den Fign. 12 und 13 ist ein Ausführungsbeispiel dargestellt, bei dem die Messungen A und B gleichzeitig durchgeführt werden können. Der optische Kopf OK ist prinzipiell in gleicher Weise ausgebildet wie derjenige von Fig. 10, jedoch ist anstelle des Dispersionsprismas ein Polarisationsprisma PP1 vorgesehen. Ferner ist zwischen der Linse LS2 und dem Polarisationsprisma PP1 ein weiteres Polarisationsprisma PP2 angeordnet, das eine Mittelöffnung für den Durchlaß des hinlaufenden Strahles aufweist.

In Fig. 12 ist der Lichtleiter LI ein Monomode-Lichtleiter mit polarisationserhaltenden Eigenschaften. Das diesem Lichtleiter LI zugeführte mehrfarbige Licht ist unter 45° linear polarisiert. Im Polarisationsprisma PP1 erfolgt eine Aufteilung des hinlaufenden Lichts in zwei intensitätsgleiche, zueinander senkrecht polarisierte Strahlen, die unterschiedliche Austrittswinkel haben und somit räumlich voneinander getrennt werden. Man erhält also durch die Linse LS1 zwei fokussierte Strahlen S1 und S2 im Meßvolumen MV mit unterschiedlichen Polarisierungsrichtungen. Da beide Strahlen mehrfarbig sind, werden bei geeigneter chromatischer Brennweitenverteilung der Linse LS1 die einzelnen Farben beider Strahlen an unterschiedlichen axialen Stellen auf ihrem kleinsten Durchmesser abgebildet. Dies ist in Fig. 13 dargestellt. Die grünen Komponenten der beiden Strahlen S1 und S2 haben grüne Fokussierungsstellen FG1 und FG2 im selben axialen Abstand von der Fokussiervorrichtung FV und die blauen Fokussierungsstellen FB1 und FB2 haben ebenfalls untereinander gleichen Abstand von der Fokussiervorrichtung FV, jedoch ist dieser Abstand der blauen Fokussierungsstellen von der Fokussiervorrichtung größer als derjenige der grünen Fokussierungsstellen von der Fokussiervorrichtung. Der Strahl S1 ist parallel polarisiert und der Strahl S2 ist senkrecht polarisiert.

Bei der Messung A wird die Fokussierungsstelle FG1 zur Erzeugung der Startimpulse und die Fokussierungsstelle FB2 für die Erzeugung der Stopimpulse benutzt. Die durch die Zentren dieser Fokussierungsstellen hindurchgehende Gerade bildet mit der Normalenebene zur optischen Achse OA den Winkel $\gamma_A$. Bei der Messung B wird die Fokussierungsstelle FB1 für die Erzeugung der Startimpulse und die Fokussierungsstelle FG2 für die Erzeugung der Stopimpulse benutzt. Die durch die Zentren dieser beiden Fokussierungsstellen hindurchgehende Gerade bildet mit der Normalenebene zur optischen Achse OA den Winkel $\gamma_B$ der gleich $-\gamma_A$ ist.

Das Streulicht aus dem Meßvolumen MV wird vom äußeren Bereich der Linse LS1 aufgefangen und durch den Polarisationsstrahlteiler PP1 geleitet, wodurch der Farbenversatz und die Aufteilung in die beiden Polarisationsrichtungen wieder rückgängig gemacht wird. Der mit einer Mittelöffnung versehene weitere Polarisationsstrahlteiler PP2 wird dazu verwendet, mittels der Linse LS2 das unterschiedlich polarisierte Streulicht aus den Fokussierungsstellen auf zwei ausreichend weit separierte Einkoppeleinheiten LII1$_I$ und LII2$_I$ abzubilden. Die mit den Einkoppeleinheiten verbundenen Lichtleiter LII1 und LII2 führen jeweils zu einer Farbaufteilungseinheit FA1 bzw. FA2, die aus dem mehrfarbigen Licht die interessierenden Komponenten blau und grün räumlich separiert. Die Farbaufteilungseinheit FA1 empfängt den parallel polarisierten Lichtanteil und die Farbaufteilungseinheit FA2 den senkrecht polarisierten Lichtanteil. Die Farbaufteilungseinheit FA1 erzeugt einen parallel polarisierten blauen Strahl BP und einen parallel polarisierten grünen Strahl GP. Diese Strahlen werden von den Photodetektoren PDBP und PDGB in elektrische Signale umgesetzt. Die Farbaufteilungseinheit FA2 erzeugt aus dem senkrecht polarisierten Strahl einen blauen Strahl BV und einen grünen Strahl GV, die räumlich voneinander getrennt sind und jeweils den Photodetektoren PDBV und PDGV zugeführt werden, die in Abhängigkeit von den Intensitäten dieser Lichtstrahlen elektrische Impulse erzeugen.

Das Ausgangssignal des Photodetektors PDGB wird der Auswerteeinheit AE$_A$ für die Messung A zugeführt und erzeugt dort einen Startimpuls, während das Ausgangssignal des Photodetektors PDBV in der Auswerteeinheit AE$_A$ einen Stopimpuls erzeugt. Das Ausgangssignal des Photodetektors PDBP wird der Auswerteeinheit AE$_B$ für die zweite Messung B zugeführt und erzeugt dort einen Startimpuls, während das Ausgangssignal des Photodetektors PDBV ebenfalls der Auswerteeinheit AE$_B$ zugeführt wird und dort einen Stopimpuls erzeugt.

Beide Meßsysteme A und B registrieren den gleichen Geschwindigkeitsbetrag des Vektors v. Daher braucht die Auswerteelektronik nur für ein System ausgeführt zu werden. Lediglich die Meßrate muß für beide Systeme A und B gleichzeitig und unabhängig voneinander festgestellt werden. Dies erfordert einen relativ geringen zusätzlichen elektronischen Aufwand.

Wenn der Abstand der beiden Strahlen S1 und S2 verändert werden soll, ist lediglich der Polarisationsstrahlteiler PP1 auszuwechseln, wobei keine Nachjustierung des Systems erforderlich ist.

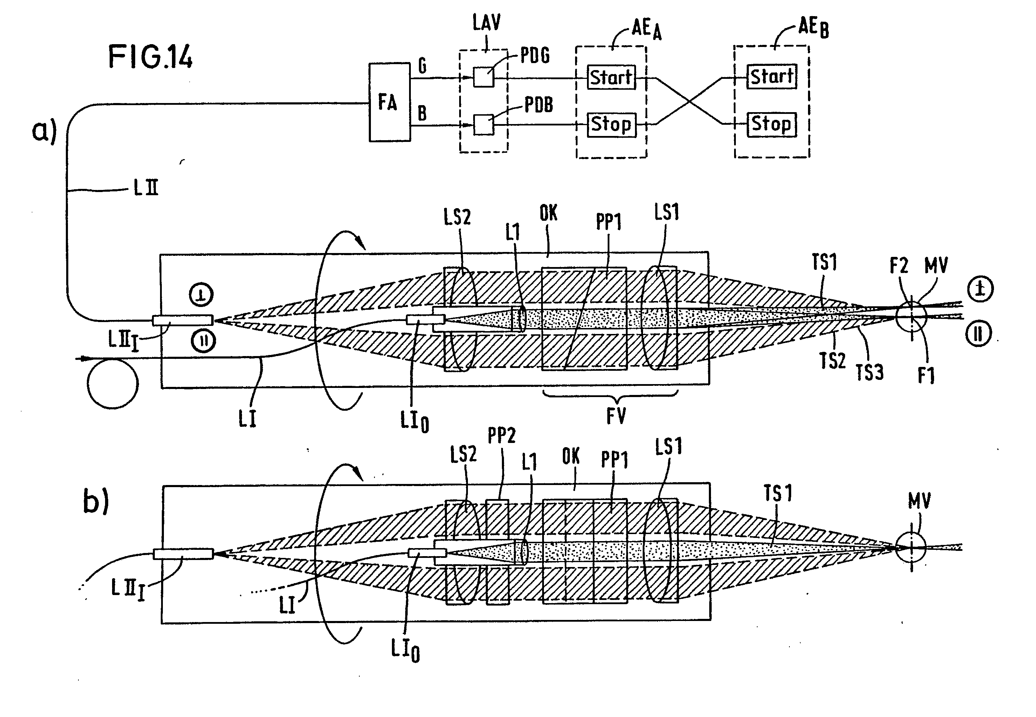

Eine andere, noch einfachere Variante des Verfahrens ist in Fig. 14 dargestellt. Bei dieser Vorrichtung wird im Meßvolumen MV ebenfalls der in Fig. 13 dargestellte Strahlenverlauf erzeugt. Der optische Kopf OK der Vorrichtung von Fig. 14 unterscheidet sich von demjenigen der Fig. 12 nur dadurch, daß der Polarisationsstrahlteiler PP2 fortgelassen ist und daß die Linse LS2 die rücklaufende Strahlung auf ein einziges Einkopplungselement LII$_l$ fokussiert, an das der zu der einzigen Farbaufteilungseinheit FA führende Lichtleiter LII angeschlossen ist. Die Farbaufteilungseinheit FA selektiert aus dem rücklaufenden Lichtstrahl die grüne Komponente G und die blaue Komponente B, die einzeln der Lichtaufnahmevorrichtung LAV zugeführt werden, welche einen Photodetektor PDG für den grünen Lichtstrahl und einen Photodetektor PDB für den blauen Lichtstrahl enthält. Das Ausgangssignal des Photodetektors PDG wird der Auswerteeinheit AE$_A$ für die Messung A als Start-Signal zugeführt, während das Ausgangssignal des Photodetektors PDB für das blaue Licht der Auswerteeinheit AE$_A$ als Stop-Signal zugeführt wird.

Die Auswerteeinheit AE$_B$ für die zweite Messung B empfängt als Start-Signal das Ausgangssignal des Photodetektors PDB und als Stop-Signal das Ausgangssignal des Photodetektors PDG.

Bei dem Ausführungsbeispiel von Fig. 14 wird die unterschiedliche Polarisierung der beiden Strahlen S1 uns S2 nur dazu benutzt, diese Strahlen räumlich voneinander zu trennen. Die Auswertung der verschiedenen Lichtkomponenten erfolgt ohne Berücksichtigung der Polarisierungsrichtung ausschließlich anhand der Farbanteile. Beide Photodetektoren PDG und PDB registrieren das gesamte Streulicht aus dem Meßvolumen. Obwohl das Streulicht, das durch die Strahlen S1 und S2 erzeugt wird, unterschiedlich polarisiert ist, kann nach Weiterleitung des Streulichts durch den Lichtleiter LII eine Trennung in zwei zueinander senkrecht polarisierte Streulichtanteile nicht mehr vorgenommen werden. Durch diese Zusammenfassung des Streulichts beider Strahlen ist bereits mit einem einzigen Photodetektor, z.B. mit PDG, eine Geschwindigkeitsmessung möglich. Allerdings kann der Richtungssinn der Geschwindigkeit (ob von Strahl S1 zu Strahl S2, oder umgekehrt) nicht mehr erkannt werden. Dies ist in einer Vielzahl von Anwendungsfällen kein Nachteil, da die ungefähre Strömungsrichtung meist vorher bekannt ist. Mit dem Photodetektor PDB würde die gleiche Geschwindigkeit gemessen wie mit dem Photodetektor PDG. Dabei ist vorausgesetzt, daß sich auf der Länge des axialen Meßortversatzes der beiden Farben, der typischerweise etwa 0,2 mm beträgt, die Geschwindigkeit im Meßvolumen nicht ändert.

Die Informationen beider Auswerteeinheiten werden an einen Vielkanalanalysator weitergegeben, der die Zeitmessungen zwischen Startimpulsen und Stopimpulsen als Häufigkeitsverteilung zur Anzeige bringt. Das Integral I, bzw. die Flache unter der Häufigkeitskurve, ist ein Maß für die Meßrate. Die Lage der Meßkurve gibt die Größe des zweidimensionalen Geschwindigkeitsvektors in der Normalebene zur optischen Achse OA an. Die Richtung des Vektors in der Normalebene wird jeweils zuvor ermittelt, indem der optische Kopf OK um die optische Achse OA herum gedreht wird, bis die Häufigkeitsverteilung ein Maximum annimmt. In dieser Winkelstellung des optischen Kopfs erfolgt dann die Messung der in Richtung der optischen Achse verlaufenden Vektorkomponente.

## Patentansprüche

1. Verfahren zur Messung der Strömungsvektoren in Gasströmungen, die optisch erfaßbare Teilchen enthalten, bei welchem
   - eine Fokussiervorrichtung (FK), die eine optische Achse (OA) aufweist, in einem Meßvolumen (MV) zwei räumlich getrennte Strahlen (SG, SB; S1, S2) an mindestens je einer Fokussierungsstelle fokussiert,
   und die Häufigkeiten gemessen werden, mit denen Teilchen zwei Fokussierungsstellen nacheinander passieren,
   **dadurch gekennzeichnet,**
   daß zur Bestimmung der in Richtung der optischen Achse (OA) verlaufenden Komponente des Strömungsvektors (   ) die Fokussierungsstellen mit voneinander abweichenden Abständen zur Fokussiervorrichtung (FV) erzeugt werden, daß zwei Messungen (A, B) durchgeführt werden, wobei der Abstand der Fokussierungsstelle des einen Strahls (S1) von der Fokussiervorrichtung bei der ersten Messung (A) kleiner und bei der zweiten Messung (B) größer ist als der Abstand der Fokussierungsstelle des anderen Strahls (S2) von der Fokussiervorrichtung (FV), oder beide Strahlen (SG, SB) nach Durchführung der ersten Messung miteinander vertauscht werden, und daß der Unterschied der beiden Meßergebnisse ($I_A$, $I_B$) zur Bestimmung der Richtung des Strömungsvektors ( ) in Bezug auf eine Normalebene zur optischen Achse (OA) benutzt wird.

2. Verfahren nach Anspruch 1, dadurch gekennzeichnet, daß verschiedene Fokussierungsstellen (F1, F2; FG2, FB2; FG1, FB1) durch mehrfarbiges Licht erzeugt werden, dessen Farben von der Fokussiervorrichtung (FV) mit unterschiedlichen Brennweiten fokussiert werden.

3. Verfahren nach Anspruch 1 oder 2, dadurch gekennzeichnet, daß die beiden Messungen (A, B) nacheinander durchgeführt werden, wobei die Fokussiervorrichtung (FV) zwischen beiden Messungen um 180° um ihre optische Achse (OA) gedreht wird.

4. Verfahren nach Anspruch 2, dadurch gekennzeichnet, daß jeder Strahl (S1, S2) aus mindestens zwei Anteilen unterschiedlicher Farbe mit unterschiedlichen Fokussierungsstellen (FG1, FB1; FG2, FB2) besteht und daß für die beiden Messungen (A, B) jeweils eine Kombination aus den Anteilen unterschiedlicher Farben benutzt wird.

5. Verfahren nach einem der Ansprüche 1 bis 4, dadurch gekennzeichnet, daß die beiden Strahlen (S1, S2) senkrecht zueinander polarisiert sind.

6. Verfahren nach Anspruch 5, dadurch gekennzeichnet, daß das von den unterschiedlich polarisierten Strahlen (S1, S2) an den Teilchen erzeugte Streulicht durch einen polarisationsstrahlenteiler (PP2) räumlich selektiert wird.

7. Vorrichtung zur Durchführung des Verfahrens nach Anspruch 1, mit

einer Laserquelle für mehrfarbiges Licht,

einer Fokussiervorrichtung (FV), die in einem Meßvolumen (MV) zwei räumlich getrennte Strahlen (SG,SB) des Laserlichts an unterschiedlichen Fokussierungsstellen (F1,F2) fokussiert,

und einer Lichtaufnahmevorrichtung (LAV), die das an den Fokussierungsstellen von den Teilchen reflektierte Streulicht empfängt und Startimpulse und Stopimpulse liefert,

und einer die Startimpulse und die Stopimpulse empfangenden und auswertenden Auswerteeinrichtung (AE),

**dadurch gekennzeichnet,**
daß die Fokussiervorrichtung (FV) einen Dispersionsstrahlenteiler (DP) und eine Linsenvorrichtung (LS1) mit chromatischen Eigenschaften enthält, durch die die räumlich getrennten verschiedenfarbigen Strahlen mit unterschiedlichen Brennweiten fokussiert werden, daß die Fokussiervorrichtung (FV) um ihre optische Achse (OA) von einer ersten in eine zweite Stellung um 180° drehbar ist, und daß die Auswerteeinrichtung (AE) derart gesteuert ist, daß sie in der ersten Stellung der Fokussiervorrichtung (FV) eine erste Zählung von Start- und Stopimpulsen und in der zweiten Stellung eine zweite Zählung von Start- und Stopimpulsen durchführt und aus den Ergebnissen beider Zählungen die Richtung des Strömungsvektors ( ) in Bezug auf die Normalebene berechnet.

8. Vorrichtung zur Durohführrung des Verfahrens nach Anspruch 1, mit

einer Laserquelle für mehrfarbiges Licht, einer Fokussiervorrichtung (FV), die in einem Meßvolumen (MV) zwei räumlich getrennte Strahlen (S1,S2) an unterschiedlichen Fokussierungsstellen (FG1,FB1;FG2,FB2) fokussiert,

und einer Lichtaufnahmevorrichtung (LAV1,LAV2), die das an den Fokussierungsstellen von den Teilchen reflektierte Streulicht empfängt und Startimpulse und Stopimpulse liefert,

und einer die Startimpulse und die Stopimpulse empfangenden und auswertenden Auswerteeinrichtung ($AE_A$, $AE_B$),

**dadurch gekennzeichnet,**
daß die Fokussiervorrichtung (FV) einen Polarisationsstrahlenteiler (PP1) und eine Linsenvorrichtung (LS1) mit chromatischen Eigenschaften enthält, die derart ausgebildet sind, daß sie aus einem mehrfarbigen Strahl zwei parallele Teilstrahlen (S1,S2) unterschiedlicher Polarisierung mit jeweils zwei in Richtung der optischen Achse (OA) zueinander versetzten verschiedenfarbigen Fokussierungsstellen (FG1,FB1;FG2,FB2) erzeugen, wobei die Winkel ($\gamma$) der beiden durch zwei verschiedenfarbige Fokussierungsstellen hindurchgehenden Geraden in bezug auf die Normalebene zur

optischen Achse (OA) der Fokussiervorrichtung unterschiedliche Vorzeichen haben, und daß die Auswerteeinrichtung (AE_A, AE_B) jeweils zusammengehörende Start- und Stopimpulse aus beiden Teilstrahlen (S1, S2) und von unterschiedlichen Farben empfängt und eine erste Messung entlang der einen Geraden und eine zweite Messung entlang der anderen Geraden ausführt und aus beiden Messungen die Richtung des Strömungsvektors (   ) in bezug auf die Normalenebene berechnet.

9. Vorrichtung nach Anspruch 8, dadurch gekennzeichnet, daß im Strahlenweg des von den Teilchen reflektierten Lichts ein zweiter Polarisationsstrahlenteiler (PP2) zur räumlichen Trennung der unterschiedlich polarisierten Lichtanteile angeordnet ist, und daß beide Lichtanteile separaten Lichtaufnahmevorrichtungen (LAV1; LAV2) zugeführt werden, die getrennte Startimpulse und Stopimpulse an separaten Auswerteeinheiten (AE_A; AE_B) erzeugt.

10. Vorrichtung nach Anspruch 8, dadurch gekennzeichnet, daß das von den Teilchen reflektierte Licht einer einzigen Lichtaufnahmevorrichtung (LAV) zugeführt wird, die von dem Licht der einen Farbe erzeugte Impulse als Startimpulse an eine erste Auswerteeinheit (AE_A) und als Stopimpulse an eine zweite Auswerteeinheit (AE_B) liefert und von dem Licht der zweiten Farbe erzeugte Impulse als Stopimpulse an die erste Auswerteeinheit (AE_A) und als Startimpulse an die zweite Auswerteeinheit (AE_B) liefert.

11. Vorrichtung nach einem der Ansprüche 7 bis 10, dadurch gekennzeichnet, daß die Auswerteeinrichtung die Differenz $(I_A - I_B)$ zwischen den Meßergebnissen der beiden Messungen (A, B) bildet.

## Claims

1. Process for measuring the flow vectors in gas currents containing optically detectable particles, in which

   a focusing means (FK), having an optical axis (OA), focuses two spatially separated beams (SG, SB; S1, S2) in a measuring volume (MV), each in at least in one focusing point

   and the frequencies are measured at which particles sucessively traverse two focusing points,

   **characterized in**

that for determining the component of the flow vector (v) extending in direction of the optical axis (OA), the focusing points are produced at mutually different distances from the focusing means (FV), that two measurements (A, B) are performed wherein the distance of the focusing point of one beam (S1) from the focusing means is, in case of the first measurement (A), smaller and in case of the second measurement (B) larger than the distance of the focusing point of the other beam (S2) from the focusing means (FV), or both beams (SG, SB) are interchanged after said first measurement has been performed, and that the difference between both measuring results $(I_A \, I_B)$ is used to determine the direction of the flow vector (v) with respect to a plane normal to the optical axis (OA).

2. Process as defined in claim 1, characterized in that various focusing points (F1, F2; FG2, FB2; FG1, FB1) are produced by heterochromatic light whose colors are focused with different focal distances by the focusing means (FV).

3. Process as defined in claim 1 or 2, characterized in that the two measurements (A, B) are performed successively, the focusing means (FV) being turned by 180° about its optical axis (OA) between two measurements.

4. Process as defined in claim 2, characterized in that each beam (S1, S2) consists of at least two components of different colors with different focusing points (FG1, FB1; FG2, FB2) and that for each of both measurements (A, B), a combination of the components of different colors is used.

5. Process as defined in claim 1, characterized in that the two beams (S1, S2) are polarized vertically with respect to each other.

6. Process as defined in claim 5, characterized in that the scattered light generated at the particles by the differently polarized beams (S1, S2) is spatially selected by a polarization beam divider (PP2).

7. A device for performing the method of claim 1, comprising
   - a laser source for heterochromatic light,
   - a focussing device (FV) for focusing in a measuring volume (MV) two spatially separated beams (SG, SB) of the laser light at different focusing points (F1, F2),
   - a light receiving means (LAV) for receiving the scattered light reflected by the particles at the focusing points and for supplying start pulses and stop pulses, and

- an evaluating means (AE) for receiving and evaluating said start and stop pulses,

**characterized in that**

the focusing means (FV) includes a dispersion beam splitter (DP) and a lens means (LS1) with chromatic properties, through which the spatially separated beams of different colors are focused with different focal distances, that said focusing means (FV) is slewable about its optical axis (OA) by 180° from a first into a second position, and that said evaluating means (AE) is controlled such that, in the first position of said focusing means (FV), it performs a first count of start and stop pulses, while, in the second position, it performs a second count of start and stop pulses, and calculates the direction of the flow vector (v) with respect to the normal plane from the results of both counts.

8. A device for performing the method of claim 1, comprising

- a laser source for heterochromatic light, a focusing device (FV) for focusing in a measuring volume (MV) two spatially separated beams (S1, S2) of the laser light at different focusing points (FG1, FB1; FG2, FB2),

- and a light receiving means (LAV1, LAV2) for receiving the scattered light reflected by the particles at the focusing points and for supplying start pulses and stop pulses,

- and an evaluating means (AE$_A$, AE$_B$) for receiving and evaluating said start and stop pulses,

**characterized in**

that the focusing means (FV) includes a polarization beam splitter (PP1) and a lens means (LS1) with chromatic properties that are designed such that, from a monochromatic beam, they generate two parallel partial beams (S1, S2) of different polarization with two respective focusing points (FG1, FB1; FG2, FB2) of different colors which are mutually offset in the direction of the optical axis (OA), the angles ($\gamma$) of the two straight lines passing through two focusing points of different colors have different signs with respect to the normal plane to the optical axis (OA) of said focusing means (FV), and that said evaluating means (AE$_A$, AE$_B$) receives respective associated start and stop pulses from both partial beams (S1, S2) and from different colors and performs a first measurement along one of said straight lines and a second measurement along the other straight line and calculates the direction of the flow vector (v) with respect to the normal plane from the two measurements.

9. Device as defined in claim 8, characterized in that in the beam path of the light reflected by the particles, there is provided a second polarization divider (PP2) for the spatial separation of the differently polarized light fractions, and that both light fractions are supplied to separate light receiving means (LAV1, LAV2) which produce separate start pulses and stop pulses to separate evaluating means (AE$_A$, AE$_B$).

10. Device as defined in claim 8, characterized in that the light reflected by the particles is supplied to one sole light receiving means (LAV) which supplies pulses generated by the light of the one color, as start pulses to a first evaluating means (AE$_A$) and as stop pulses to a second evaluating means (AE$_B$), while pulses generated from the light of the second color is supplied as stop pulses to the first evaluating means (AE$_A$) and as start pulses to the second evaluating means (AE$_B$).

11. Device as defined in one of claims 7 to 10 characterized in that the evaluating means forms the difference ($I_A$ - $I_B$) between the measuring results of the two measurements.

**Revendications**

1. Procédé de mesure des vecteurs de courant dans des écoulements de gaz contenant des particules optiquement détectables, dans lequel un dispositif de focalisation (FK), qui présente un axe optique (OA), focalise dans un volume de mesure (MV) deux faisceaux (SG, SB ; S1, S2), séparés dans l'espace, en au moins chaque fois un point de focalisation, et les fréquences, suivant lesquelles des particules passent successivement par deux points de focalisation sont mesurées,

caractérisé en ce que, pour déterminer la composante du vecteur de courant (    ) s'étendant dans la direction de l'axe optique (OA), les points de focalisation sont produits avec des distances par rapport au dispositif de focalisation (FV) différentes l'une de l'autre, qu'il est effectué deux mesures (A, B), la distance du point de focalisation d'un faisceau (S1) par rapport au dispositif de focalisation étant, lors de la première mesure (A), plus petite et, lors de la seconde mesure (B), plus grande que la distance du point de focalisation de l'autre faisceau (S2) par rapport au dispositif de focalisation (FV), ou les deux faisceaux (SG, SB) étant, après la réalisation de la première mesure, échangés l'un avec l'autre, et que la différence entre les deux résultats de mesure (IA, IB) est utilisée pour la détermination de la direction du vecteur de courant ( ) par rapport à un plan normal à l'axe optique (OA).

2. Procédé suivant la revendication 1, caractérisé en ce que différents points de focalisation (F1, F2 ; FG2, FB2 ; FG1, FB1) sont produits par de la lumière multicolore dont les couleurs sont focalisées par le dispositif de focalisation (FV) avec des distances focales différentes.

3. Procédé suivant la revendication 1 ou 2, caractérisé en ce que les deux mesures (A, B) sont effectuées l'une après l'autre, le dispositif de focalisation (FV) étant tourné, entre les deux mesures, de 180° autour de son axe optique (OA).

4. Procédé suivant la revendication 2, caractérisé en ce que chaque faisceau (S1, S2) se compose d'au moins deux parties de couleurs différentes à points de focalisation (FG1, FB1 ; FG2, FB2) différents et que, pour les deux mesures (A, B), il est chaque fois utilisé une combinaison des parties de couleurs différentes.

5. Procédé suivant l'une des revendications 1 à 4, caractérisé en ce que les deux faisceaux (S1, S2) sont polarisés perpendiculairement l'un par rapport à l'autre.

6. Procédé suivant la revendication 5, caractérisé en ce que la lumière diffusée produite sur les particules par les faisceaux (S1, S2) à polarisation différente est sélectionnée dans l'espace par un diviseur de faisceau à polarisation (PP2).

7. Dispositif pour la mise en oeuvre du procédé suivant la revendication 1, comportant :
   - une source de lumière laser pour de la lumière multicolore,

   - un dispositif de focalisation (FV) qui focalise dans un volume de mesure (MV) deux faisceaux (SG, SB) de la lumière laser, séparés dans l'espace, à des points de focalisation (F1, F2) différents,
   - et un dispositif de réception de lumière (LAV) qui reçoit la lumière diffusée réfléchie par les particules aux points de focalisation et fournit des impulsions de départ et des impulsions d'arrêt,
   - et un dispositif d'évaluation (AE) recevant et évaluant les impulsions de départ et les impulsions d'arrêt,
      - caractérisé en ce que le dispositif de focalisation (FV) contient un diviseur de faisceau à dispersion (DP) et un dispositif de lentille (LS1) à propriétés chromatiques à travers lequel sont focalisés, avec des distances focales différentes, les faisceaux de couleurs différentes séparés dans l'espace, que le dispositif de focalisation (FV) peut être tourné de 180° autour de son axe optique, d'une première en une seconde position, et que le dispositif d'évaluation (AE) est commandé de telle manière qu'il effectue, dans la première position du dispositif de focalisation (FV), un premier comptage d'impulsions de départ et d'arrêt et, dans la seconde position, un second comptage d'impulsions de départ et d'arrêt et calcule, à partir des résultats des deux comptages, la direction du vecteur de courant ( ) par rapport au plan normal.

8. Dispositif pour la mise en oeuvre du procédé suivant la revendication 1, comportant :
   - une source de lumière laser pour de la lumière multicolore,
   - un dispositif de focalisation (FV) qui focalise dans un volume de mesure (MV) deux faisceaux (S1, S2), séparés dans l'espace, en des points de focalisation (FG1, FB1 ; FG2, FB2) différents,
   - et un dispositif de réception de lumière (LAV1, LAV2) qui reçoit la lumière diffusée réfléchie par les particules aux points de focalisation et fournit des impulsions de départ et des impulsions d'arrêt,
   - et un dispositif d'évaluation (AEA, AEB) recevant et évaluant les impulsions de départ et les impulsions d'arrêt,
      - caractérisé en ce que le dispositif de focalisation (FV) contient un diviseur de faisceau à polarisation (PP1) et un dispositif de lentille (LS1) à propriétés chromatiques, qui sont réalisés de telle manière qu'ils produisent, à partir d'un faisceau multicolore, deux faisceaux partiels parallèles (S1, S2) à polarisation différente chaque fois avec deux points de focalisation (FG1, FB1 ; FG2, FB2) de couleurs différentes décalés l'un par rapport à l'autre dans la direction de l'axe optique (OA), les angles (γ) des deux droites passant par deux points de focalisation de couleurs différentes, par rapport au plan normal à l'axe optique (OA) du dispositif de focalisation, ayant des signes différents, et que le dispositif d'évaluation (AEA, AEB) reçoit chaque fois des impulsions de départ et d'arrêt correspondantes des deux faisceaux partiels (S1, S2) et de couleurs différentes et effectue une première mesure le long de l'une des droites et une seconde mesure le long de l'autre droite et calcule, à partir des deux mesures, la direction du vecteur de courant (    ) par rapport au plan normal.

9. Dispositif suivant la revendication 8, caractérisé en ce que, dans le trajet du faisceau de la lumière réfléchie par les particules, est disposé un second diviseur de faisceau à polarisation (PP2) pour la séparation dans l'espace des parties de lumière à polarisation différente et que les deux parties de lumières sont amenées à des dispositifs de réception de lumière séparés (LAV1 ; LAV2) qui produisent des impulsions de départ et des impulsions d'arrêt séparées sur des dispositifs d'évaluation (AEA, AEB) séparés.

10. Dispositif suivant la revendication 8, caractérisé en ce que la lumière réfléchie par les particules est amenée à un seul dispositif de réception de lumière (LAV) qui fournit les impulsions engendrées par la lumière d'une couleur à un premier dispositif d'évaluation (AEA), comme impulsions de départ, et à un second dispositif d'évaluation (AEB), comme impulsions d'arrêt, et les impulsions engendrées par la lumière de la seconde couleur au premier dispositif d'évaluation (AEA), comme impulsions d'arrêt, et au second dispositif d'évaluation (AEB), comme impulsions de départ.

11. Dispositif suivant l'une des revendications 7 à 10, caractérisé en ce que le dispositif d'évaluation forme la différence (IA-IB) entre les résultats de mesure des deux mesures (A, B).

## FIG.1

FIG.2

FIG.3

FIG.4

FIG.5

FIG.6

# FIG.7

## a)

## b)

FIG.8

EP 0 286 720 B1

FIG.9

# FIG.10

a)

b)

EP 0 286 720 B1

# FIG.11

a)

b)

EP 0 286 720 B1

# FIG.12

a)

b)

FIG.13

FIG.14